# EUROPEAN PATENT APPLICATION

(11) **EP 4 656 518 A1**
(43) Date of publication of application: **03.12.2025**
(21) Application number: 24178447.9
(22) Date of filing: 28.05.2024
(51) Int. Cl.: B64D 11/04, B64D 11/06, B64D 11/00

(54) **GALLEY MONUMENT INCLUDING A CREW REST COMPARTMENT**

(71) Applicant: AIRBUS Operations GmbH, 21129 Hamburg (DE); Airbus (S.A.S.), 31700 Blagnac (FR)
(72) Inventor: Schmidt-Schäffer, Tobias, 21129 Hamburg (DE); Salinas, Sophie, 31700 Blagnac (FR); Martinez, Paul, 31700 Blagnac (FR)
(74) Representative: Schornack, Oliver

(57) **Abstract**

The present disclosure relates to a monument (100) for an aircraft (1). The monument includes a main trolley compartment (110), a countertop (160) arranged above the main trolley compartment, and a crew rest compartment (120) arranged on at least a portion of the countertop (160) and at least partially encapsulated by monument walls (122, 123, 124, 127).

## Description

The present disclosure generally relates to a monument for an aircraft including a crew rest compartment. Particularly, the present disclosure relates to a monument having a trolley compartment and a crew rest compartment arranged thereon, as well as an aircraft section and an aircraft comprising such monument.

A conventional aircraft is equipped with monuments, such as a galley, lavatory, and the like. Some aircraft types, particularly designed for long haul flights, include crew rest compartments, which are arranged underneath a cabin floor, such as in the cargo area or in a crown area of the aircraft fuselage. Such crew rest compartments are accessible via a ladder usually provided in the area of a galley instead of a cabinet.

Such aircrafts for long haul flights are regularly larger in diameter (particularly in height and width of a cross-section of the fuselage), so that crown area crew rest compartments can be built without significantly restricting the passenger areas, for example, without delimiting the size of overhead stowage compartments or the like.

Smaller aircraft types, such as a single aisle aircraft, are nowadays modified and prepared for long haul flights. However, such smaller aircraft types do not provide enough space for a crown area crew rest compartment. The size of the cargo area is likewise limited and shall rather be used for luggage and cargo instead of crew rest areas.

Crew members (pilots and flight attendants) are required to take a break and rest during such long haul flights. Without a dedicated crew rest compartment, passenger seats are regularly used as a resting area. In order to achieve at least some privacy, blankets are used to cover the passenger seats. This, however, is not only uncomfortable for the crew members, but also requires passenger seats to be left empty during the flight, i.e. that cannot be sold which reduces revenue of the aircraft operator.

It is therefore an object of the present disclosure to provide a comfortable and space-saving crew rest area.

This object is solved by the present invention as defined in the independent claims. Preferred embodiments are defined by the dependent claims.

According to a first aspect to better understand the present disclosure, a monument for an aircraft comprises a main trolley compartment, a countertop arranged above the main trolley compartment, and a crew rest compartment arranged on at least a portion of the countertop and at least partially encapsulated by monument walls.

Thus, a dedicated crew rest area/compartment is provided that does not require keeping passenger seats empty. The privacy of a resting crew member is improved due to the dedicated area, i.e. not somewhere between passengers.

In addition, although the monument takes up space in the aircraft, the combination with a trolley compartment allows a space-saving installation of a crew rest area/compartment. In other words, the crew rest compartment is integrated into a galley compartment, which regularly comprises a trolley compartment, i.e. a parking or storage space for one or more trolleys. Arranging the crew rest compartment on at least a portion of the countertop further allows maintaining a portion of the countertop, so that it can still be used as in a regular galley. In summary, the space above the countertop of a regular galley, which is usually used for galley inserts (coffeemaker, oven, etc.), can be used differently to integrate the crew rest compartment.

In an implementation variant, the crew rest compartment can have a maximum length in a direction arranged diagonally to a front edge of the countertop. The front edge of the countertop is usually installed in an aircraft in a transverse direction (Y-axis). Providing the maximum length of the crew rest compartment diagonally thereto renders the space required for the crew rest compartment in the longitudinal direction (X-axis) of the aircraft shorter (compared to a crew rest compartment fully extending in the longitudinal direction). Thus, a cabin space usually used to install passenger seats is less restricted.

In an implementation variant, a rear portion of the crew rest compartment can extend over a back wall of the main trolley compartment. Thus, the space behind the back wall of the main trolley compartment and underneath the crew rest compartment can be used for other purposes. The back wall of the main trolley compartment is arranged opposite to the front edge, i.e. opposite to an opening where trolleys are moved into and out of the main trolley compartment. As a mere example, the space underneath the crew rest compartment can be used as a space for storing (hand) luggage or as an area where a passenger sitting behind the monument can place their feet. This allows installing a first passenger seat (row) closer to the monument compared to a cubic monument.

In an implementation variant, a recess can be formed in the back wall. Such recess can likewise be used as a storage space or as a space where a passenger can rest their feet, so that the comfort of the passenger is increased and the first passenger seat (row) can be closer to the front of the aircraft.

In an implementation variant, the monument can further comprise an additional trolley compartment arranged at a rear side of the main trolley compartment and accessible from a side wall of the monument. Since the crew rest compartment extends over the back wall of the main trolley compartment, a space behind the main trolley compartment can be used as an additional trolley compartment. The sidewall of the monument can be arranged to face an aisle of the aircraft, so that trolleys can be moved into and out of the additional trolley compartment from such aisle.

In an implementation variant, the monument can further comprise a foldable ladder configured to be coupled to the countertop and/or one of the monument walls. Such foldable ladder facilitates entry and exit of a crew member to and from the crew rest compartment. The ladder being folded together takes up less space, for example, for storage.

In an implementation variant, the foldable ladder can be configured to slide along the main trolley compartment. Thus, the ladder can be brought to a position where it facilitates entry to and exit from the crew rest compartment, and can be moved when not in use to a different position in front of the main trolley compartment, for example, to place or remove a trolley in the main trolley compartment. For instance, the ladder can be configured to slide along the front edge and/or the countertop. This can be achieved by the front edge forming an upward protrusion and/or having a groove into which the ladder can engage and slide along. Such protrusion and/or groove further facilitates catching any liquid that is spilled on the countertop.

As a mere example, a dimension of the ladder in the direction of the front edge of the main trolley compartment can correspond to a width of a standard trolley, such as approximately 300 to 350 mm, preferably 325 mm. Thus, the ladder blocks only one parking space of a trolley, so that the other trolleys parking spaces of the main trolley compartment are still accessible. By moving/sliding the ladder along the front edge, access to all trolley parking spaces can be achieved.

Furthermore, the ladder can be sized to be stored in a trolley, so that it can be stowed away entirely. Alternatively, a trolley, such as a half size trolley can be configured as including steps. Thus, by pulling out the trolley from the main trolley compartment, steps are available to enter the crew rest compartment, and the "ladder trolley" can entirely be stowed away. In case of a half size trolley, another half size trolley can be parked behind the "ladder trolley" for storing food, beverages, glasses or the like.

In an implementation variant, the monument can further comprise a closure configured to open and close an access opening into the crew rest compartment. Such closure can be a door, shutter, roller gate or a curtain. As a mere example, a thick fabric curtain can be used as a closure, which blocks noise from entering the crew rest compartment and provides sufficient privacy, while it is lightweight and easy to remove in case of an emergency.

In an implementation variant, the monument can further comprise at least one handlebar. Such handlebar can be arranged in close proximity to the access opening, so that it facilitates entry and exit to and from the crew rest compartment.

In an implementation variant, the monument can further comprise a reading light arranged in the crew rest compartment. Thus, a comfortable environment can be achieved for a crew member being in the crew rest compartment.

According to a second aspect to better understand the present disclosure, an aircraft section comprises a monument of the first aspect or one or more of its variants.

In an implementation variant, the aircraft section can further comprise a passenger seat arranged at a rear side of the monument. Thus, the monument forms a front limit of a passenger cabin area. As a mere example, a back wall or rear wall of the monument can be used to install components usually provided in front of the passenger seat, such as a newspaper pocket, a TV screen (infotainment screen) or the like.

In an implementation variant, where the monument has a recess in the back wall of the main trolley compartment, the passenger seat can be arranged relative to the monument in a manner that the recess forms a foot rest for a passenger sitting in the passenger seat. Usually, a passenger can rest their feet in an area underneath a passenger seat arranged in front of the passenger. In case of the first seat (row) a monument has to be installed sufficiently away from the passenger seat to provide enough space for resting their feet or legs. In case of the monument having a recess, the passenger seat can be installed closer to the monument, as the feet/leg rest area is provided by the recess in the back wall. Thus, a very space-saving installation of the monument and the first passenger seats behind the monument can be achieved.

In an implementation variant, the monument comprises a display screen and/or a storage compartment accessible from the passenger seat. Thus, the usually expected comfort of the passenger seat directly behind the monument can be achieved. There is no necessity to provide a specially designed passenger seat, where equipment (such as display screen and/or pockets) is provided in the same passenger seat, such as a foldable and extendable TV screen or table in an armrest.

In an implementation variant, the aircraft section can further comprise at least a portion of a main aisle extending in a longitudinal direction of the aircraft, an aircraft door, a door aisle extending from the aircraft door to the main aisle, wherein the monument delimits the door aisle on one side, and a divider configured to temporarily separate the door aisle from the main aisle. The divider can be a door, curtain, accordion partition or the like that can move between a stored/stowed position and a dividing position parallel to the main aisle. When in the dividing position, the space above the door aisle is separated from the main aisle and, hence, from the remaining passenger cabin and galley area of the aircraft. Thus, a privacy area can be achieved in front of (the access opening of) the crew rest compartment. This allows the crew member to change or the like before and after using the crew rest compartment.

In an implementation variant, the aircraft section can further comprise an overhead stowage compartment arranged above a portion of a ceiling of the crew rest compartment. In other words, the ceiling of the crew rest compartment is arranged at a height (vertical level) in the aircraft that is underneath a bottom of the overhead stowage compartment. Thus, the crew rest compartment can extend beyond a back wall of the main trolley compartment, but without blocking the space usually used for an overhead stowage compartment. Thus, the passenger seat (row) behind the monument still has sufficient stowage capacity.

Alternatively, the crew rest compartment has a ceiling at a height corresponding to a top region of overhead stowage compartments, so that the space usually used for such overhead stowage compartment is blocked and used by the monument. This allows increasing the space inside of the crew rest compartment, which increases comfort for the crew member.

According to a second aspect to better understand the present disclosure, an aircraft comprises at least one monument of the first aspect or one or more of its variants, and/or at least one aircraft section of the second aspect or one or more of its variants.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates an aircraft section with a first exemplary monument;
- Figure 2: schematically illustrates an aircraft section with a second exemplary monument;
- Figure 3: schematically illustrates an aircraft section as in Figure 2 with a different seat configuration;
- Figures 4 to 6: schematically illustrate different views of a monument;
- Figure 7: schematically illustrates a top view of a monument with the ceiling partially cut open;
- Figure 8: schematically illustrates side views of two different aircraft sections; and
- Figure 9: schematically illustrates perspective views of an aircraft section with different configurations of an exemplary monument

In the following description, for purposes of explanation and not limitation, specific details are set forth in order to provide a thorough understanding of the present disclosure. It will be apparent to one skilled in the art that the present disclosure may be practiced in other implementations that depart from these specific details.

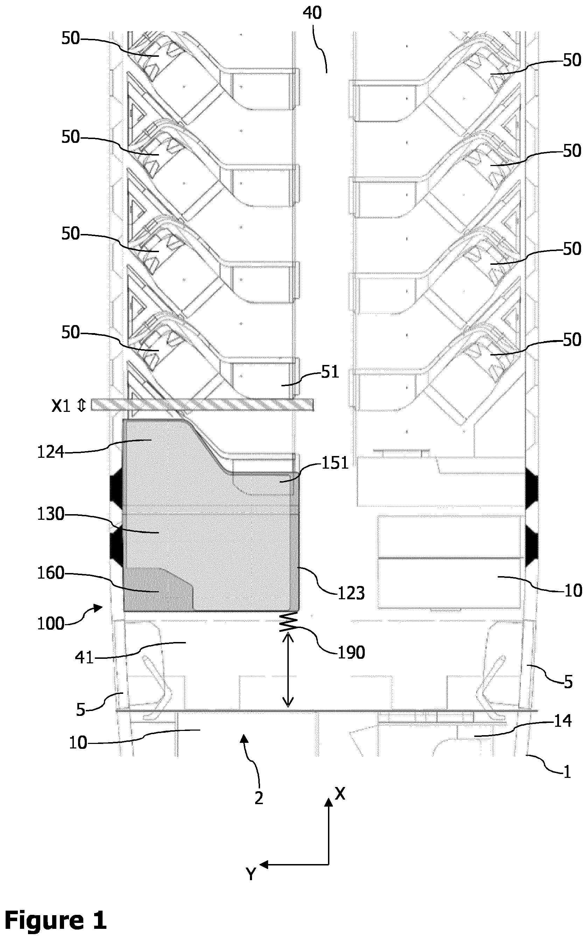

Figure 1 schematically illustrates an aircraft section 2 with a first exemplary monument 100 as a top view of this portion of the aircraft 1. The aircraft section 2 comprises a passenger seat 50 (Figure 1 illustrates a plurality of passenger seats, one or more of which can be considered as forming part of the aircraft section). Particularly, a passenger seat 50 is arranged behind the monument 100.

Terms such as front, back, rear, behind, above, underneath, etc. are to be understood with respect to horizontal and vertical directions, and with respect to a longitudinal direction (X-axis) and a transverse direction (Y-axis) of the aircraft 1. As will be explained in more detail below, the front of the monument 100 is facing a door aisle 41, while the back of the monument 100 is facing the passenger seats 50, which corresponds to the front-to-back direction of the aircraft 1 along its X-axis.

The monument 100 comprises at least a portion of a main aisle 40 extending in the longitudinal direction of the aircraft 1, and a door aisle 41 extending in the transverse direction of the aircraft 1. Specifically, the aircraft section comprises an aircraft door 5, such as aircraft door 5 to the left in Figure 1 adjacent to the monument 100. Thus, the door aisle 41 extend from the aircraft door 5 to the main aisle 40, i.e. connects the aircraft door 5 with the main aisle 40.

The passenger seat 50 behind the monument 100 is arranged diagonally with respect to the transverse and longitudinal directions of the aircraft 1. This allows extending at least a section 124 of the monument 100 towards the rear. This section 124 can have a diagonally arranged back wall 124 corresponding to the diagonal arrangement of the passenger seat 50.

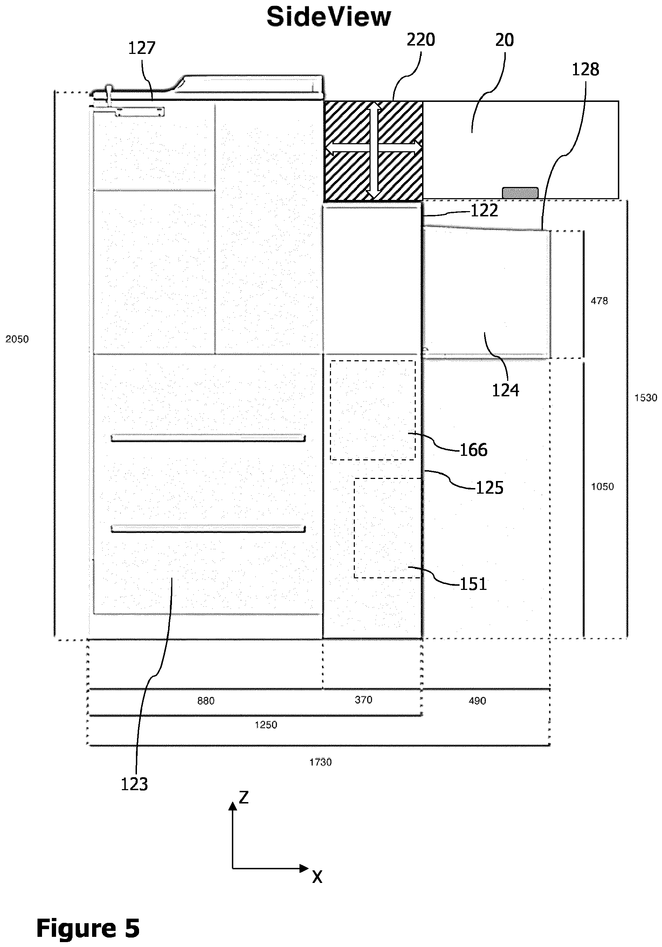

The exemplary monument 100 of Figure 1 includes a recess 151 in a back wall 125 (Figure 5). Such recess 151 in the monument 100 corresponds to a foot rest area 51 of passenger seats 50 arranged further down the main aisle 40, where a passenger can place their feet while travelling. As a mere example, Figure 1 illustrates business class seats, which may be brought into a bed position, where the seat cushion and back rest (and optionally a leg rest) of the seat 50 can be moved into a flat position. In the flat position, the passenger seat 50 may form, together with a bottom of the recess 151 (or foot rest area 51) a continuous bed for the passenger to lie on. Thus, the comfort of the first passenger seat 50 behind the monument 100 is the same as in the remaining passenger seats 50.

As can be derived from a comparison of the first passenger seat 50 on the opposite side of the aisle 40, the monument 100 requires the passenger seats 50 behind the monument 100 to be placed further to the rear of the aircraft 1 by a distance X1. Due to the recess 151, such distance X1 can be quite small, such as between 3 and 10 inch (7.5 cm to 25 cm), preferably the distance X1 is only 4 inch (10 cm).

A sidewall 123 facing the main aisle 40 delimits the monument 100 as well as the main aisle 40. The monument 100 can further comprise a countertop 160, which can be used as a horizontal surface to place items or prepare food and beverages, for example, during service for passengers.

The aircraft section 2 can further comprise additional monuments, such as galleys 10 and/or a lavatory 14 arranged in the vicinity of the door aisle 41, such as between oppositely arranged aircraft doors 5. This corresponds to a regular arrangement of monuments in a front region of an aircraft 1.

It is to be understood that the monument 100 can also be arranged at a rear area of the aircraft, or somewhere in-between.

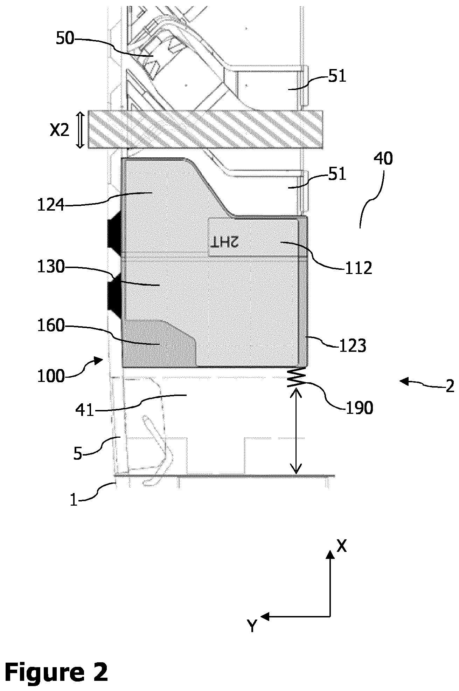

Figure 2 schematically illustrates an aircraft section 2 with a second exemplary monument 100. Components that are the same as those in the example of Figure 1 are provided with the same reference numerals. For sake of brevity, the explanation of such components is omitted.

The difference between the second exemplary monument 100 of Figure 2 and the first exemplary monument 100 of Figure 1 is the lack of a recess 151. Instead, a regular passenger seat 50 is arranged behind the monument 100 including its own foot rest 51. Thus, no specifically designed first passenger seat 50 has to be provided and installed. On the other hand, the distance X2 about which the passenger seats 50 are moved further to the rear of the aircraft is larger than the distance X1 of the first exemplary monument 100 of Figure 1. This distance X2 can be between 8 and 20 inches (approximately 20 cm to 51 cm), preferably 12.5 inch (approximately 31.75 cm).

On the other hand, the space occupied by the recess 151 in the example of Figure 1 can be used in this exemplary configuration of Figure 2 as an additional trolley compartment 112 arranged at a rear side of the monument 100 and accessible from the sidewall 123. As a mere example, the depth of the additional trolley compartment 112 (measured in the transverse direction (Y-axis)) can correspond to the depths of two half size trolleys, i.e. the depth of a full-size trolley. However, using two half size trolleys facilitates manoeuvring such smaller trolleys in and out of the additional trolley compartment 112 from the main aisle 40, which is usually smaller compared to the door aisle 41.

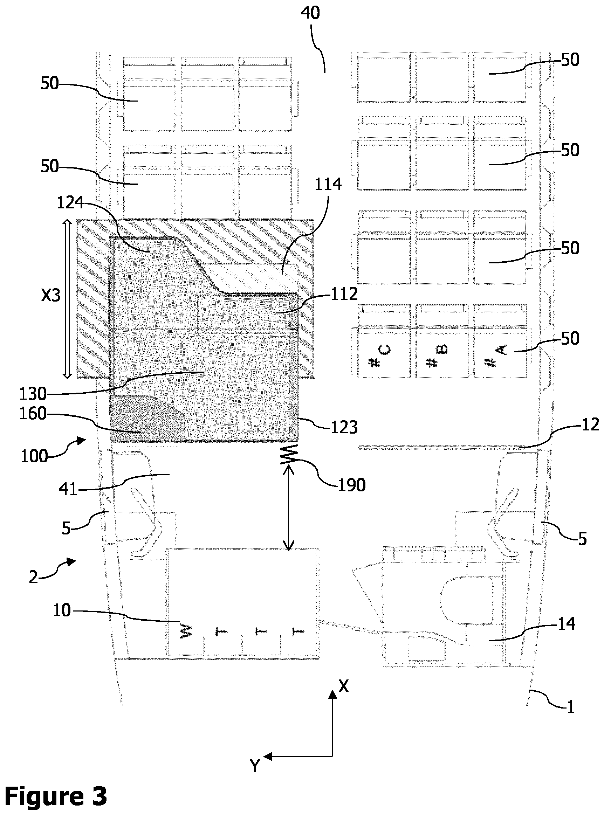

Figure 3 schematically illustrates an aircraft section 2 as in Figure 2 with a different seat configuration. Specifically, the seat configuration comprises a plurality of passenger seats 50 arranged in rows on both sides of the main aisle 40. In the illustrated example, each seat rows comprises three passenger seats 50 on each side of the main aisle 40.

As can be derived from a comparison of Figures 2 and 3, the space lost for passenger seats, i.e. the distance X3 about which the first seat row has to be moved further to the rear of the aircraft 1 due to the monument 100 is much larger compared to seat configurations of Figures 1 and 2. This is due to the arrangement of the seats 50 in rows, where each passenger faces along the longitudinal X-axis, i.e. a non-diagonal seating position.

Nevertheless, an additional storage area 114 can be provided, either for the passengers sitting in the first passenger seats 50 behind the monument 100 or for general storage purpose in the passenger cabin.

Furthermore, in a non-illustrated example, the first seat row may still be installed closer to the monument 100, if the first seat row comprises less passenger seats 50 and the remaining seat rows. Specifically, by omitting one or two passenger seats 50 at the window side, for example, maintaining only the passenger seat 50 at the main aisle 40 would allow moving this passenger seat 50 closer to the back side of the monument 100. In other words, the distance X3 for this passenger seat 50 would be smaller than illustrated. On the other hand, the additional storage area 114 has to be omitted and has to be used as a foot rest space for the passenger.

The illustrated aircraft section 2 comprises a further exemplary monument in form of a separating wall 12. This separating wall 12 delimits a door aisle 41 on the right-hand side in Figure 3 from a passenger cabin, i.e. in front of the first seat row to the right-hand side in Figure 3.

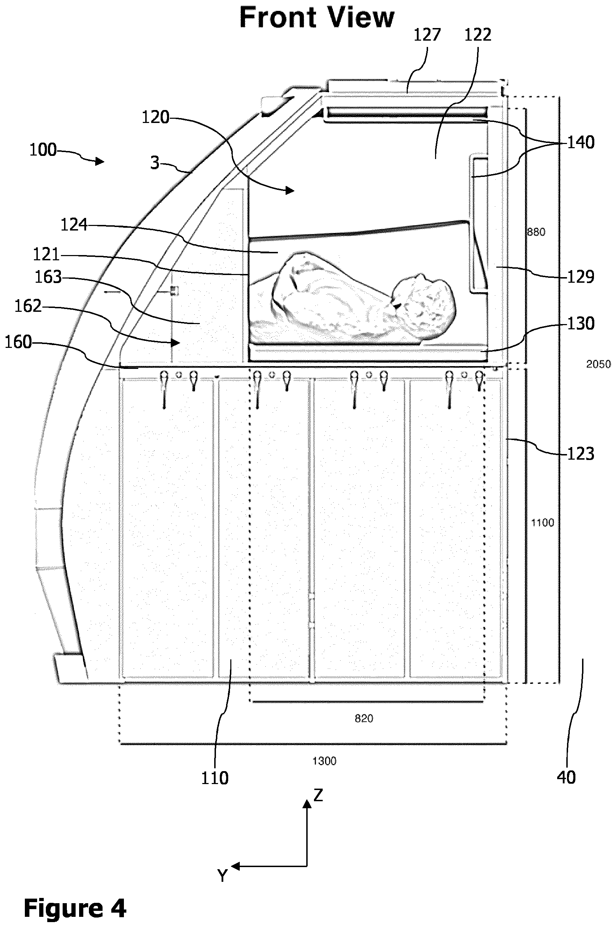

Figures 4 to 6 schematically illustrate different views of the monuments 100 of Figures 1 to 3. The dimensions given in the drawings specify only one possible value. It is to be understood that variations in the dimensions are possible. The following explanations indicate such possible variations of the dimensions by referring to, for example, +/- 100 mm. Thus, the illustrated dimension can have any value within a range specified by *"*+/- 100 mm".

Specifically, Figure 4 illustrates a front view of a monument 100 that comprises a main trolley compartment 110. This main trolley compartment 110 provides a storage or parking space for trolleys. In the illustrative example, the width of the main trolley compartment 110 allows storing/parking four trolleys and is approximately 1300 mm (+/- 100mm). The main trolley compartment 110 is delimited to the main aisle 40 by a sidewall 123 of the monument 100. The width of the main trolley compartment 110 substantially corresponds to the maximum width of the monument 100, which substantially extends from a side wall 3 of the aircraft 1, such as an outer skin or primary structure of the fuselage, to the main aisle 40.

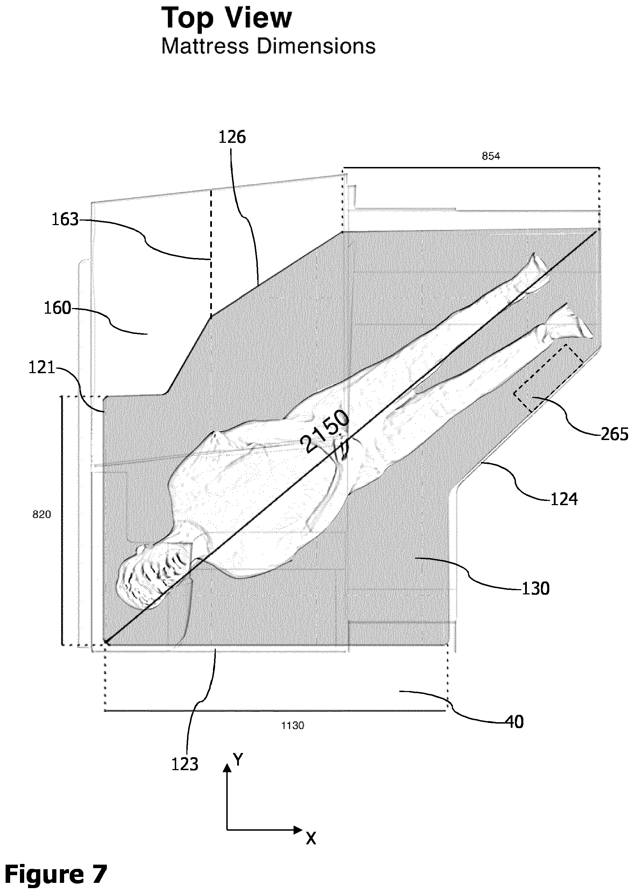

The monument 100 comprises a countertop 160 arranged above the main trolley compartment 110. The height of the countertop 160 can be approximately 1100 mm (+/- 50mm). As can be derived, the countertop 160 is accessible to the left hand side of the monument 100 in Figure 4, so that a preparation area 162 is formed, where items, such as a tray, food and/or beverages or the like can be placed. The preparation area 162 is delimited from the crew rest compartment 120 to the rear by a side wall 126 (Figure 7). A door 163 (see also Figure 7) can be arranged in the preparation area 162 dividing the preparation area 162 in two parts, i.e. a stowage cabinet and a free countertop 160.

A crew rest compartment 120 is arranged on at least a portion of the countertop 160 and is at least partially encapsulated by monument walls. The side wall 123 also delimits the crew rest compartment 120 with respect to the main aisle 40. Back walls 122 and 124 further delimit the interior space of the crew rest compartment 120 with respect to the passenger cabin. The front view illustration of Figure 4 further shows a ceiling 127 also forming a monument wall encapsulating the crew rest compartment 120 at the top.

An access opening 121 is arranged at a front side of the monument 100, above the countertop 160 allowing access to and leaving the interior space of the crew rest compartment 120. As mere examples, such opening can have a width of 820 mm (+/- 50mm) and a height of 880 mm (+/- 50mm). Thus, the maximum height of the monument 100 can be approximately 2050 mm (+/- 100mm).

It is to be understood that all dimensions given in the description and drawings of this disclosure or for exemplary purposes. It is further to be understood that such dimensions may vary depending on the size/dimensions of the aircraft fuselage, so that the monument 100 can be installed in the aircraft 1 in the most space efficient manner, while allowing comfort inside of the crew rest compartment 120. As a mere example, in case that a diameter of the fuselage is larger, the width and height of the monument 100 can also increase.

Handlebars 140 at the ceiling 127 and/or the side wall 123 facilitate entering and leaving the crew rest compartment 120 through the opening 121. A closure 129 is further provided to open and close the access opening 121. Figure 4 illustrates the closure 129 in an open position. The closure 129 can be implemented as a (fabric) curtain, a shutter, a rollable gate or the like.

Figure 5 schematically illustrates a side view of the monument 100, viewing from the main aisle 40 in the transverse direction of the aircraft 1 (towards the exterior, such as the outer skin 3).

As can be derived from Figure 5, the rear portion 124 of the crew rest compartment 120 extends over a back wall 125 of the main trolley compartment 110. As a mere example, the rear portion 124 can extend by approximately 490 mm (+/- 50mm). Thus, a space underneath this rear portion 124 is free for other purposes. As illustrated, the free space can have a height of 1050 mm (+/- 50mm).

The back wall 125 in the illustrated example is actually spaced apart from a rear end of the main trolley compartment 110 by a distance of 370 mm (+/- 100mm). Specifically, the depth of the main trolley compartment 110 (in longitudinal direction of the aircraft 1) is approximately 880 mm (+/- 50mm), while the back wall 125 is arranged further to the rear of the aircraft 1 (to the right in Figure 5). This allows increasing the interior space of the crew rest compartment 120.

In addition, an additional storage compartment 166 can be provided in this extended portion underneath the crew rest compartment 120. Access to such additional storage compartment 166 can be possible from the back wall 125 as well as from the sidewall 123. As a mere example, a door (not explicitly illustrated) may be provided to close the additional storage compartment 166.

As described with respect to the example of Figure 1, a recess 151 can be formed in the back wall 125 that is accessible from the side of the back wall 125, and can be made available for a passenger sitting behind the monument 100.

The rear portion 124 can have a height of approximately 478 mm (+/- 100mm). Thus, a ceiling 128 of the rear portion 124 can be lower than a ceiling 127 at the front of the monument 100. The lower ceiling 128 allows arranging an overhead stowage compartment 20 thereabove. Thus, a regularly arranged overhead stowage compartment 20 can be maintained as in a conventional aircraft 1.

The region above the additional storage compartment 166, where the back walls 125 and 122 are set back compared to the rear end of the main trolley compartment 110 can either have a lower ceiling or can have a ceiling corresponding to the higher ceiling 127 at the front of the monument 100. Figure 5 illustrates a hashed area 220, where the ceiling and the back wall 122 can either be lower and further to the front or higher and further to the back as illustrated by the respective double arrows. Thus, if the hashed area is not blocked by the monument 100, a further overhead stowage compartment 20 can be placed. Alternatively, if the hashed area is blocked by the monument 100, the interior space of the crew rest compartment 120 can be increased, which also increases comfort for the crew member, particularly due to the extended higher ceiling 127.

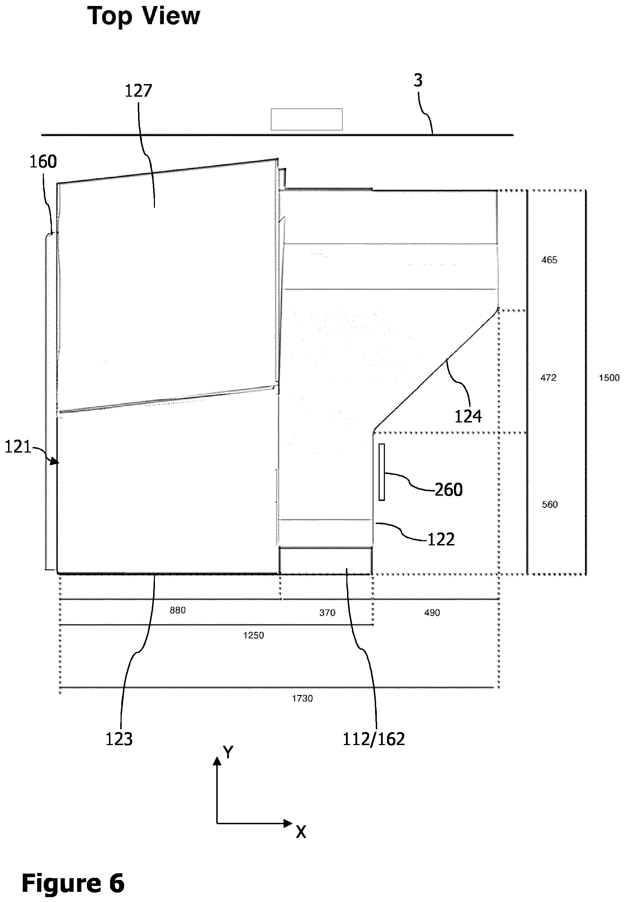

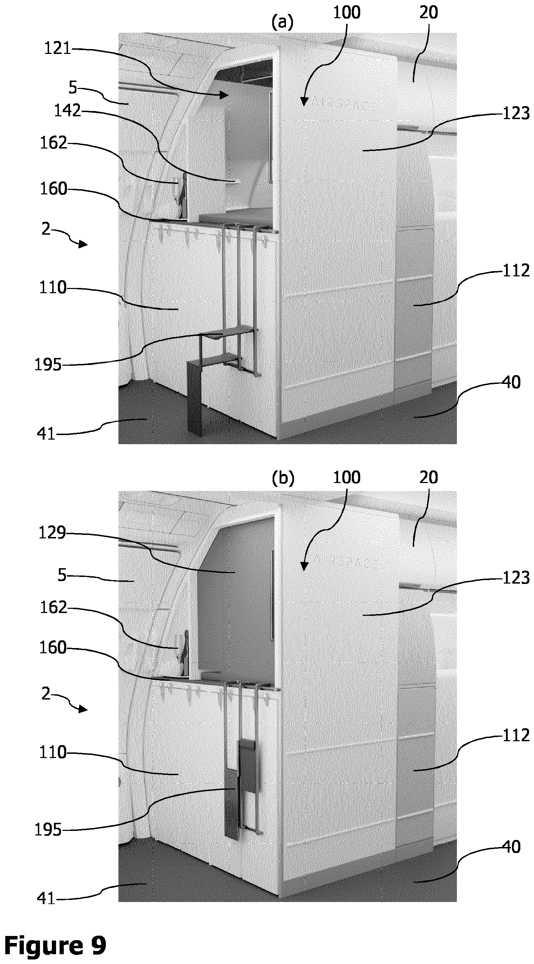

Figure 6 schematically illustrates a top view showing the monument 100 arranged next to the outer skin 3 (or any other structure forming the fuselage of the aircraft). At the front side of the monument 100 (to the left in Figure 6) the countertop 160 is illustrated as extending further to the front than the upper ceiling 127 and the wall forming the access opening 121. This allows easier access into the crew rest compartment 120, facilitates the arrangement of a closure 129 and the provision of means helping to enter the crew rest compartment 120 (such as a ladder 195 (Figure 9)).

The depth or length in a longitudinal direction (X-axis) of the monument 100 is approximately 1730 mm (+/- 100mm). The width (in transverse direction (Y-access)) of the rear portion 124 of the monument 100 can be approximately 465 mm (+/-100mm), which provides sufficient interior space for the crew rest compartment 120. For instance, this dimension provides sufficient feet or leg space inside of the crew rest compartment 120 as will be illustrated in more detail with respect to Figure 7. The width of the rear portion 124 can also be chosen corresponding to an overhead stowage compartment 20 arranged thereabove, in order to achieve a neat appearance of the monument 100 and the overhead stowage compartment 20.

The width (in transverse direction (Y-axis)) of the inclined portion of the back wall at the rear portion 124 can be approximately 472 mm (+/- 100mm), and can be adapted to the arrangement of a passenger seat 50 behind the monument 100. Likewise, the depth in longitudinal direction of this inclined portion of the back wall at the rear portion 124 can be approximately 490 mm (+/- 100mm), and can also be adapted to the arrangement of a passenger seat 50 behind the monument 100. For instance, as illustrated in Figure 1, the back wall at the rear portion 124 can be inclined at an angle with respect to the longitudinal direction that corresponds to the angle of arrangement of the passenger seat 50.

A TV screen 260 (or infotainment screen) for a passenger sitting behind the monument 100 can be arranged at the rear wall or back wall 122. Likewise, a pocket or other stowage means (not illustrated in Figure 6) can be provided at the rear wall or back wall 122.

Figure 7 schematically illustrates a top view of a monument 100 with the ceiling 127, 128 cut open. Specifically, Figure 7 illustrates a footprint of the interior space of the crew rest compartment 120. This footprint shape can also define the shape of a mattress 130 provided on the countertop 160 inside the crew rest compartment 120. The sidewall 126 delimiting the crew rest compartment 120 from the preparation area 162 can be arranged in an inclined manner, so that the preparation area 162 can be increased, while the interior space of the crew rest compartment 120 is sufficiently large for a person to sit therein. As a mere example, the sidewall 126 can be used as a back rest for a person sitting in the crew rest compartment 120 (with the legs facing towards the main aisle 40).

The rear portion 124 can have a depth or length in longitudinal direction behind the sidewall 126 of approximately 854 mm (+/- 100 mm). The opening 121 can have a width in transverse direction of approximately 820 mm (+/- 100 mm) providing sufficient space to enter and leave the crew rest compartment 120. The sidewall 123 facing the main aisle 40 can have a width in longitudinal direction of approximately 1130 mm (+/- 100 mm). Such crew rest compartment 120 can have a maximum length in a direction arranged diagonally to a front edge of the countertop 160, i.e. diagonally to the longitudinal and transverse directions. Such maximum length can be approximately 2150 mm (+/- 100 mm).

Figure 7 further illustrates a possible arrangement of a stowage compartment 265. This can either be accessible for a passenger sitting behind the monument 100, by being accessible from the exterior of the monument 100, or be accessible from the inside, such as an interior pocket or the like arranged for storage of items by the crew member being in the crew rest compartment 120.

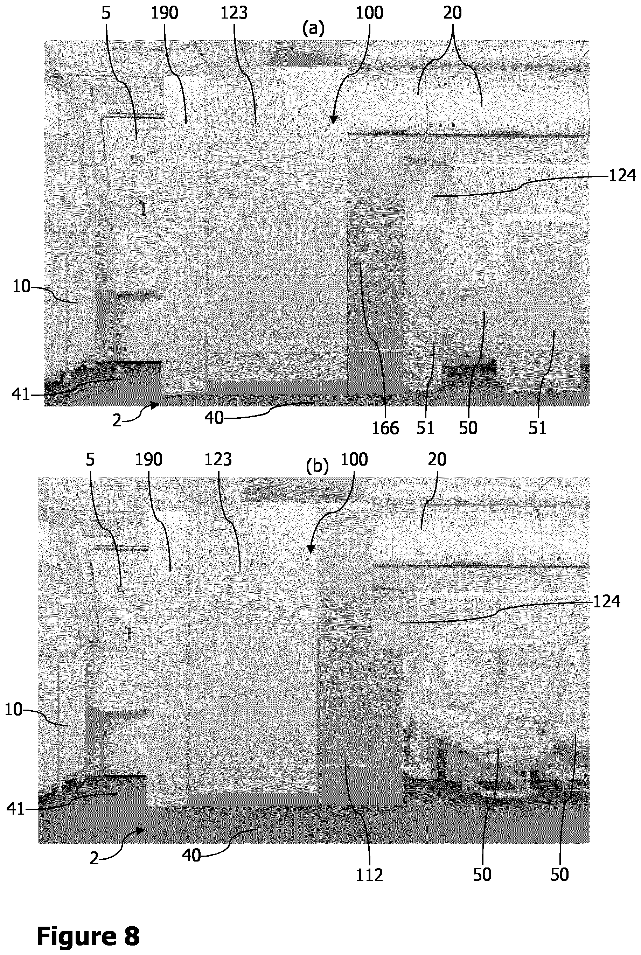

Figure 8 schematically illustrates perspective side views of two different aircraft sections 2. Specifically, Figure 8(a) illustrates a business class seat 50 arranged diagonally in the aircraft 1 behind the monument 100. The foot rest portion 51 of the passenger seat 50 can be integrated into the monument 100, for example, with a recess 151 (not illustrated in Figure 8).

A curtain 190 is illustrated as a possible divider configured to temporarily separate the door aisle 41 from the main aisle 40. By closing the curtain 190 (which is illustrated in an open position), the space of the door aisle 41 behind the curtain 190 can be used as a room for changing or other purposes by a crew member when accessing or leaving the crew rest compartment 120.

The monument 100 in the area of the back wall 122 has a reduced height compared to the front portion of the monument 100 with the higher ceiling 127, so that a region above this area of the monument 100 is left free for the installation of an overhead stowage compartment 20. Thus, the overhead stowage capabilities for the passenger seats 50 are increased.

Figure 8(b) illustrates a similar aircraft section 2 with the following differences compared to Figure 8(a). Specifically, the passenger seats 50 are arranged in transverse rows, such as in an economy class seating configuration.

Furthermore, the monument 100 in the area of the back wall 122 has the same height as the front portion of the monument with the higher ceiling 127. Thus, the interior space of the overhead stowage compartment 120 is increased. On the other hand, the stowage compartment 20 as illustrated in Figure 8(a) has to be omitted.

Moreover, instead of an additional stowage compartment 166, a trolley parking space 112 is provided underneath the countertop 160 (and hence underneath the crew rest compartment 120). An access to the trolley parking space 112 is possible from the main aisle 40.

Figure 9 schematically illustrates perspective views of an aircraft section 2 with different configurations of an exemplary monument 100. Specifically, Figure 9(a) illustrates the monument 100, where the closure 129 is in a stowed position leaving the opening 121 free to enter the crew rest compartment 120. To facilitate entry, a foldable ladder 195 configured to be coupled to the countertop 160 is provided. As a mere example, the foldable ladder 195 can be configured to slide along the main trolley compartment 110. It rests on the floor, such as the door aisle 41, and/or can abut against the front of the main trolley compartment 110. The countertop 160 can optionally include a groove or a rising protrusion (not illustrated) at the front edge of the countertop 160, into which the foldable ladder 195 can be inserted, so that it hangs at the countertop 160 and can slide along the front edge.

Furthermore, a reading light 142 is arranged in the crew rest compartment 120, in order to provide a light inside the crew rest compartment 120. It is to be understood that the reading light 142 can alternatively or additionally be provided at the ceiling 127 or any other monument wall 122 - 128.

Figure 9(b) schematically illustrates the same monument as in Figure 9(a), but with the closure 129 brought into the closed position, so that the opening 121 is closed and the interior space of the crew rest compartment 120 is separated from the door aisle 41. Such closure 129 can be, for example, a thick fabric curtain or a fabric curtain having an insulation, so that noise is cancelled or at least reduced to make the crew rest compartment 120 audibly comfortable.

The foldable ladder 195 is brought into a folded position, so that it is relatively flat and the steps are provided parallel to the front of the monument 100, i.e. the front of the main trolley compartment 110. Thus, the ladder 195 can be stowed away and does not form an obstacle for a person working in the area of the door aisle 41. It is to be understood that the ladder 195 can also be stowed in a cabinet or space like stowage space 166, or a trolley.

Alternatively, a trolley (not illustrated) can be built that includes one or two steps correspondingly to the steps of ladder 195. Thus, the trolley can simply be parked in the main trolley compartment 110 when not in use and be pulled out into the door aisle 41 when in use. A half size trolley can be enough to provide such ladder, so that another half size trolley can be parked in the main trolley compartment 110 behind the "ladder trolley".

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A monument (100) for an aircraft (1), comprising:
a main trolley compartment (110);
a countertop (160) arranged above the main trolley compartment (110); and
a crew rest compartment (120) arranged on at least a portion of the countertop (160) and at least partially encapsulated by monument walls (122, 123, 124, 127, 128).

2. The monument (100) of claim 1, wherein the crew rest compartment (120) has a maximum length in a direction arranged diagonally to a front edge of the countertop (160).

3. The monument (100) of claim 1 or 2, wherein a rear portion (124) of the crew rest compartment (120) extends over a back wall (125) of the main trolley compartment (110).

4. The monument (100) of claim 3, wherein a recess (151) is formed in the back wall (125).

5. The monument (100) of one of claims 1 to 4, further comprising:
an additional trolley compartment (112) arranged at a rear side of the main trolley compartment (110) and accessible from a side wall (123) of the monument.

6. The monument (100) of one of claims 1 to 5, further comprising:
a foldable ladder (195) configured to be coupled to the countertop (160) and/or one of the monument walls (122, 123, 124, 127),
wherein, preferably, the foldable ladder (195) is configured to slide along the main trolley compartment (110).

7. The monument (100) of one of claims 1 to 6, further comprising:
a closure (129) configured to open and close an access opening (121) into the crew rest compartment (120); and/or
at least one handlebar (140); and/or
a reading light (142) arranged in the crew rest compartment (120).

8. An aircraft section (2), comprising:
a monument (100) of one of claims 1 to 7.

9. The aircraft section (2) of claim 8, further comprising:
a passenger seat (50) arranged at a rear side of the monument (100),
wherein, preferably, the monument is the monument of claim 4, and the passenger seat (50) is arranged relative to the monument (100) in a manner that the recess (151) forms a foot rest for a passenger sitting in the passenger seat (50).

10. The aircraft section (2) of claim 9, wherein the monument comprises a display screen (260) and/or a storage compartment (265) accessible from the passenger seat (50).

11. The aircraft section (2) of one of claims 8 to 10, further comprising:
at least a portion of a main aisle (40) extending in a longitudinal direction of the aircraft (1);
an aircraft door (5);
a door aisle (41) extending from the aircraft door (5) to the main aisle (40), wherein the monument (100) delimits the door aisle (41) on one side; and
a divider (190) configured to temporarily separate the door aisle (41) from the main aisle (40).

12. The aircraft section (2) of one of claims 8 to 11, further comprising:
an overhead stowage compartment (20) arranged above a portion (128) of a ceiling of the crew rest compartment (120).

13. An aircraft (1), comprising:
at least one monument (100) of one of claims 1 to 7; and/or
at least one aircraft section (2) of one of claims 8 to 12.
